# EUROPEAN PATENT SPECIFICATION

(11) **EP 3 603 413 B1**
(45) Date of publication and mention of the grant of the patent: **22.07.2020**
(21) Application number: 19386035.0
(22) Date of filing: 22.07.2019
(51) Int. Cl.: A23L 7/126, A23L 17/00

(54) **BREADED NUGGET PRODUCT CONTAINING PEELED SHRIMP OR OTHER PEELED SHELL-BEARING CATCH PIECES AND PRODUCT PRODUCTION METHOD**
PANIERTES NUGGETPRODUKT, DAS GESCHÄLTE GARNELEN ODER ANDERE GESCHÄLTE SCHALENTRAGENDE FANGSTÜCKE ENTHÄLT UND VERFAHREN ZUR HERSTELLUNG DES PRODUKTES
PRODUIT DE PÉPITES PANÉES CONTENANT DES CREVETTES DÉCORTIQUÉES OU D'AUTRES PIÈCES DE CAPTURE PELÉES PORTANT UNE COQUILLE ET PROCÉDÉ DE PRODUCTION DU PRODUIT

(30) Priority: 30.07.2018 GR 20180100352
(43) Date of publication of application: 05.02.2020
(73) Proprietor: ATHANASIOS CHATZISOTIRIOU ABEE ALIEVMATON SA with distinguishing title AQUA TRADE SA, 57004 Nea Mihaniona (Thessaloniki) (GR)
(72) Inventor: Chatzisotiriou, Athanasios, 57004 Nea Michaniona (Thessaloniki) (GR)
(74) Representative: Yazitzoglou, Evagelia S.

(56) References cited:
- WO-A1-82/02819
- WO-A2-2008/124569
- US-A- 4 092 435
- US-A- 4 871 560
- US-A1- 2010 034 926

## Description

The present invention refers to breaded nugget product that contains peeled shrimp or other peeled shell-bearing catch pieces according to claim 1. It also refers to production method of the product and use of milled shrimp or other catch shell mixture as peeled shrimp or other peeled catch mixture coloring and binding material.

US4871560 discloses fish products, particularly patties or nuggets, which are formed from waste trimmings and cuttings of frozen whole fish fillets using only fish meat as a natural binding means.

According to the invention breaded nugget product is proposed, containing peeled shrimp or other peeled catch pieces, which contains 40% to 60% breading mixture, which contains breadcrumbs and flours and 60% to 40% peeled shrimp or other peeled catch mixture, which contains a mixture of milled shrimp or other catch shell and water, which is used as coloring and binding material of the peeled shrimp or other peeled catch without use of synthetic coloring substances, this mixture not being used as breading material.

In the milled shrimp or other catch shell and water mixture an emulsifier may be also added, e.g. soy lecithin.

The binding property of the milled shrimp or other catch shell and water mixture derives from the fact that in the shells are contained proteins and fat (40% and 14% respectively for shrimp shell) which during milling in the presence of water create hydrolyzates, which during pre-frying are flocculated due to the heat, resulting in the coalescence of the matrix of the food comprising them.

The present invention will be better understood by reading the description which will be implemented by means of production examples of a breaded nugget product of whole peeled shrimp pieces.

In this particular example, shrimp is used as raw material. The shrimp type is preferably Parapenaeus longirostris which is caught mainly in the Mediterranean. Instead of shrimp other peeled shell-bearing catches can be used, such as any species of shrimp, prawn, crawfish or any other crustacean.

Parapenaeus longirostris shrimp contains one of the higher astaxanthin amounts among the crustaceans, while its biggest amount is found in its shell. Astaxanthin is the coloring substance offering the bright red colour to this particular crustacean species and the one supplying the product with the suitable colour, eliminating the need for synthetic coloring substance use. Moreover, the obtained hue is similar to that of the fresh raw material therefore coloring with astaxanthin enhances the product's impression of freshness. Coloring with astaxanthin may be obtained also in case of use of other crustacean flesh for the making of the nugget paste, as the same coloring substance naturally exists in these animal species as well. However the higher coloring substance concentration in shrimp - particularly in its shell - makes it particularly suitable for using its shell as raw material for nugget paste coloring.

Parapenaeus longirostris shrimp has also an advantage over the other high seas shrimp species concerning the organoleptic character it gives to the product as:
a) Parapenaeus longirostris is caught in a way that causes stress in it thereby accelerating its internal organ autolysis.
b) hepatopancreas, internal shrimp organ, contains enzymes that seep towards the muscle tissues of the tail
c) the enzymes of hepatopancreas are proteolytic resulting in an increase of the free amino acids in the flesh,
d) the free amino acids add a sweet taste,
e) the free amino acids react through Maillard and Strecker reactions producing substances that give the characteristic fried/grilled shrimp smell during the pre-frying of the nugget. Moreover, the Parapenaeus species shrimps contain a higher proline amount compared to other catches, which is an essential precursor substance for the production of the aromatic compounds that give the characteristic fried/grilled shrimp smell during the pre-frying of the nugget.

Furthermore, Parapenaeus longirostris lives in temperate climates therefore it contains psychrotrophic proteolytic bacteria, as well as enzymes acting in low temperatures. This is why during its stay in chilling temperatures proteolysis is performed at a faster pace in contrast to what happens in shrimp species living in warmer climates. Faster proteolysis releases due to ATP hydrolysis nucleotides (AMP, IMP) which add pleasant taste.

Due to its small size Parapenaeus longirostris is decomposed faster than bigger shrimp species, therefore the precursor compounds for the production of characteristic fried/grilled shrimp smell during the pre-frying of the nugget appear faster in higher concentrations. No other similar size shrimps of high commercial value, caught in a similar way in the high seas, are found.

The product according to the invention can have the following composition:
1. 40% to 60% breading mixture containing breadcrumbs and flours. Gluten is not contained in these ingredients.
   The composition can be the following: Breadcrumbs: (rice flour (50-60%), chickpea flour, corn flour (1-5%), salt, dextrose (<1%). Flours: rice flour (90-100%), salt (5-10%), Pepper (1-5%). Gruel flour: corn flour, potato starch, salt.
**2.** 60% to 40% shrimp mixture containing 93,6% to 94,1% peeled shrimp, binding mixture (potato starch) from 0,5 % to 0 %, psyllium (fibre) 0,28%, monosodium glutamate 0,092% and also 2,75% milled shrimp shell, 2,75% water and 0,028% emulsifier, e.g. soy lecithin. The mixture is presented in gruel form, in which are immersed whole shrimp parts.

Due to the use of milled shrimp shell mixture as coloring and binding material of the peeled shrimp mixture the according to the state of the art usual binding substance amount of 2,3% to 2,5% by the weight of the shrimp mixture decreases at least at 0,5% and may even be zero. Thus at the same time the shrimp amount increases resulting in richer taste. The same applies if instead of milled shrimp shell milled shell of other catch is used. Instead of peeled shrimp other peeled catch may be used as well.

Instead of monosodium glutamate other taste enhancer/additive or/and seasoning and spice mixture in form of powder or finely chopped mixture, e.g. (and without being limited to the following) chives, garlic, onion, dill, thyme, pepper, paprika, etc can be used.

Alternatively the breadcrumbs, flour and gruel composition can be varied so that they have the suitable rheological properties for each particular application. For example, gluten-containing breadcrumbs-flours can be used.

The production procedure for the particular example (shrimp pieces with milled shrimp shell mixture) comprises the following stages:
i. Shrimp peeling and separation from its shell, which is collected and milled in cutter machine. Peeling is performed in a space with a maximum temperature of 12°C.
ii. Initially water is heated at a temperature of 60°C and mixed with emulsifier, e.g. with soy lecithin, in hydrocolloid homogenizer. The emulsifier is added in an amount of 0,5% by the water weight. Alternatively an emulsifier may not be used.
iii. Then, the water and emulsifier mixture or only the water, if emulsifier has not been added, is chilled at ambient temperature.
iv. The milled shrimp shell is mixed with the water-emulsifier solution or, if emulsifier has not been added, with the water in a 1:1 proportion in hydrocolloid homogenizer. Thus mixture is produced for the subsequent coloring and binding of the peeled shrimp. Coloring substances are not added in the mixture.

The water : emulsifier proportion may be changed depending on the rheological properties of the shell mixture required for each particular application.
v. We dissolve sodium citrate anhydrous in an amount of 3,5% in water.
vi. In a vacuum tumbler the sodium citrate solution is mixed with whole peeled (fresh or defrosted) shrimp parts in a 0,1:1 proportion for 20' under vacuum 5% at a temperature of 2°C. The shrimp is neither chopped nor milled.

Instead of the tumbler, other mixer with or without blades and with or without vacuum use may be used.
vii. In the tumbler the shell mixture is added (stage 4) in an amount of 6% by the peeled shrimp initial weight and mixed for 20' under vacuum 5% at a temperature of 2°C.
viii. In the tumbler binding substance mixture is added in an amount in the range of from 0,5% to 0% by the shrimp mixture weight, 0,3% psyllium (fibre) and 0,1% monosodium glutamate. The amounts are calculated based on the peeled shrimp initial weight. Then the content is mixed for 20' without vacuum at a temperature of 2°C. Thus, a mixture containing whole immersed in gruel shrimp parts is produced which we will call shrimp paste.
ix. The shrimp paste is fed in forming machine. Nuggets in predetermined shape, e.g. in big shrimp or meatball shape, containing whole shrimp parts exit the die of the machine at a temperature ranging from -2 to 0°C.
x. The nuggets are pre-floured.
xi. Passing through gruel 'curtain' follows. The gruel mixture has been produced by means of flour-water mixing in a 1:1,72 proportion. This proportion ensures that the product will have a solid form and be able to maintain its shape and forming. Moreover, either chemically modified starch or/and cellulose or/and beta-glucan derivatives can be added in the gruel, in amounts indicated by the food law as well as salt.
xii. Breading in gluten free breadcrumbs and flour mixture follows.
   Composition: Breadcrumbs: (rice flour (50-60%), chickpea flour, corn flour (1-5%), salt, dextrose (<1%). Flours: Rice flour (90-100%), salt (5-10%), Pepper (1-5%).
xiii. Then the breaded pieces are pre-fried with sunflower or any other kind of oil suitable for frying in spray fryer. It refers to a method of spraying, during which the product is sprayed with oil on both sides so that its taste is sealed from the spices and herbs obtained during the breading and the product is formed so that it will be ready for packaging.
   Alternatively the frying may be performed by means of tank or curtain fryer.
xiv. The pre-fried products pass through blast freezer tunnel. They may exit the tunnel at a temperature of either -18°C (frozen products) or 0°C (chilled products). Different temperature results in: different package, other preparation method on the part of consumer and different life cycle of the product.
xv. Packaging follows. Concerning chilled products in particular, they can be packaged in modified atmosphere (indicatively nitrogen 70% - carbon dioxide 30% mixture).

During the production of the nuggets shrimp shell for the production of other catch nuggets, or other catch shell for the production of shrimp nuggets, or other catch shell for the production of the same or other catch nuggets, can be used according to claim 10.

The breaded nugget product according to the invention does not suffer the usual quality drawbacks of breaded products. In particular there isn't any breadcrumbs to find inside the product but only the shrimp or other catch with a minimum amount of binding substances, thus increasing the shrimp or other catch amount in the final product. There aren't also any artificial taste enhancers or coloring substances in its composition. Due to pre-frying by means of spraying with hot oil for a minimum amount of time, avoidance of acrylamide forming is obtained. Moreover spraying with oil 'seals' the product pieces preventing the escape of shrimp or other catch humidity during pre-frying. Thus, the product remains externally crusty, while being internally juicy. Another advantage lies in the fact that the breadcrumbs is not detached from the product piece surface during the pre-frying procedure, as preferably it is not immersed in oil.

## Claims

1. Breaded nugget product containing whole peeled shrimp or other peeled catch pieces, which contains 40% to 60% breading mixture, which contains breadcrumbs, flours and gruel mixture and 60% to 40% peeled shrimp or other peeled catch mixture, **characterized in that** the peeled shrimp or other peeled catch mixture contains a mixture of milled shrimp or other catch shell and water, which is used as coloring and binding material of the peeled shrimp or other peeled catch without use of synthetic coloring substances, this mixture not being used as breading material.

2. Breaded nugget product of whole peeled shrimp or other peeled catch pieces according to claim 1, **characterized in that** the mixture of milled shrimp or other catch shell and water contains emulsifier in an amount of 0,5% by the water weight.

3. Breaded nugget product of whole peeled shrimp or other peeled catch pieces according to claim 1 or 2, **characterized in that** the breading mixture has the following composition: Breadcrumbs: (rice flour (50-60%), chickpea flour, corn flour (1-5%), salt, dextrose (<1%). Flours: rice flour (90-100%), salt (5-10%), pepper (1-5%), wherein the gruel mixture has been produced by flour-water mixing in a 1:1,72 proportion.

4. Breaded nugget product of whole peeled shrimp or other peeled catch pieces according to claim 1, 2 or 3, **characterized in that** the peeled shrimp or other peeled catch mixture has the following composition: 93,6% to 94,1% % peeled shrimp or other peeled catch, binding substance mixture ranging from 0,5 % to 0 %, psyllium (fibre) 0,28%, taste enhancer/additive or/and seasoning and spice mixture in powder or finely chopped mixture form 0,092%, 2,75% milled shrimp shell or milled other catch shell and 2,75% water, wherein the peeled shrimp or other peeled catch mixture is in the form of gruel in which are immersed whole shrimp or other peeled catch parts.

5. Breaded nugget product of whole peeled shrimp or other peeled catch pieces according to claim 4, **characterized in that** the peeled shrimp or other peeled catch mixture further contains emulsifier in an amount of 0,5% by the water weight.

6. Breaded nugget product of whole peeled shrimp or other peeled catch pieces according to claim 4 or 5, **characterized in that** the taste enhancer/additive is monosodium glutamate.

7. Breaded nugget product of whole peeled shrimp or other peeled catch pieces according to claim 1, 2, 3, 4, 5 or 6, **characterized in that** the peeled shrimp or other peeled catch mixture contains a mixture of milled shrimp shell or milled other catch shell and water and optionally emulsifier in an amount of 0,5% by the water weight.

8. Breaded nugget product of whole peeled shrimp or other peeled catch pieces according to claim 1, 2, 3, 4, 5, 6 or 7, **characterized in that** the product contains peeled shrimp pieces and that a mixture of milled shrimp shell and water is used as the peeled shrimp coloring and binding material.

9. Breaded nugget product of whole peeled shrimp or other peeled catch pieces according to claim 8, **characterized in that** the shrimp type is Parapenaeus longirostris.

10. Use of mixture of milled shrimp or other catch shell and water in a 1:1 proportion with or without emulsifier in an amount of 0,5% by the water weight as coloring and binding material of peeled shrimp or other peeled catch mixture.

11. Peeled shrimp or other peeled catch piece-containing breaded nugget production method **characterized by** the following stages:
i. Peeling of the shrimp or other shell-bearing catch, collection of the shells and milling of them in cutter machine, wherein peeling is performed in space with maximum temperature of 12°C
ii. Heating of water at a temperature of 60°C and optionally mixing of the water with emulsifier in hydrocolloid homogenizer, wherein the emulsifier is added in an amount of 0,5% by the water weight
iii. Chilling of the water and emulsifier mixture or only the water if emulsifier has not been added at ambient temperature
iv. Mixing of the milled shrimp or other catch shell with the water-emulsifier solution or, if emulsifier has not been added, the water in a 1:1 proportion in hydrocolloid homogenizer, to produce mixture for the subsequent coloring and binding of the peeled shrimp or other catch
v. Dissolution of sodium citrate anhydrous in an amount of 3,5% in water
vi. Mixing of the sodium citrate solution with whole peeled shrimp parts or pieces of the other catch in vacuum tumbler in a 0,1:1 proportion for 20' under vacuum 5% at a temperature of 2°C
vii. Addition in the vacuum tumbler of the mixture for the coloring and binding of the peeled shrimp or other catch in an amount of 6% by the peeled shrimp initial weight and mixing for 20' under vacuum 5% at a temperature of 2°C.
viii. Addition in the vacuum tumbler of binding substance mixture in an amount in the range of from 0,5% to 0% by the shrimp or other catch mixture weight, 0,3% psyllium (fibre) and 0,1% monosodium glutamate or other taste enhancer/additive or/and seasoning and spice mixture in powder or finely chopped mixture form, wherein the amounts are calculated based on the peeled shrimp or other catch initial weight and mixing of the content for 20' without vacuum at a temperature of 2°C, resulting in the production of mixture containing whole shrimp parts or pieces of the other catch that are immersed in gruel
ix. Feeding of the mixture that contains whole immersed in gruel shrimp parts or pieces of the other catch in forming machine, wherein at a temperature in the range of from -2 to 0°C whole shrimp part or other catch piece-containing nuggets exit the machine die in predetermined shape
x. Pre-flouring of the nuggets
xi. Passing through gruel «curtain», wherein the gruel mixture has been produced by means of flour-water mixing in a 1:1,72 proportion and wherein either chemically modified starch or/and cellulose or and beta-glucan derivatives may be optionally added to the gruel, in amounts indicated by the food law as well as salt.
xii. Breading of the nuggets in breadcrumbs and flour mixture.
xiii. Pre-frying of the nuggets with sunflower or any other kind of oil suitable for frying in spray fryer and
xiv. Passing of the pre-fried nuggets through blast freezer tunnel wherein they exit at a temperature of either -18°C (frozen products) or 0°C (chilled products).

12. Peeled shrimp or other peeled catch piece-containing breaded nugget production method according to claim 11, wherein instead of the vacuum tumbler other mixer with or without blades and with or without vacuum use is used.

13. Peeled shrimp or other peeled catch piece-containing breaded nugget production method according to claim 11 or 12, wherein the breading mixture has the following composition: Breadcrumbs: (rice flour (50-60%), chickpea flour, corn flour (1-5%), salt, dextrose (<1%). Flours: rice flour (90-100%), salt (5-10%), pepper (1-5%).

14. Peeled shrimp or other peeled catch piece-containing breaded nugget production method according to claim 12 or 13, wherein the mixture for the coloring and binding of the peeled shrimp or other catch contains a mixture of milled shrimp or other catch shell and water and optionally emulsifier in an amount of 0,5% by the water weight.

15. Peeled shrimp or other peeled catch piece-containing breaded nugget production method according to claim 14, wherein the shrimp type is Parapenaeus longirostris.

## Patentansprüche

1. Ein paniertes Nuggetprodukt enthaltend ganze geschälte Garnelestücke oder andere geschälte Fangstücke, welches
40% bis 60% einer Panierungsmischung, die Brotkrümel, Mehl und Breimischung enthält, und
60% bis 40% einer Mischung von geschälten Garnelen oder anderem geschältem Fang,
enthält,
**dadurch gekennzeichnet daß** die Mischung von geschälten Garnelen oder anderem geschältem Fang eine Mischung aus vermahlenen Garneleschalen oder anderen vermahlenen Fangschalen und Wasser enthält, die als Farbstoff und Bindemittel für die geschälten Garnelen oder den anderen geschälten Fang ohne Verwendung von synthetischen Farbstoffen verwendet ist, wobei die Mischung nicht als Panierungstoff verwendet wird.

2. Ein paniertes Nuggetprodukt enthaltend ganze geschälte Garnele- oder andere geschälte Fangstücken gemäß Anspruch 1, **dadurch gekennzeichnet daß** die Mischung aus vermahlenen Garnelenschalen oder anderen vermahlenen Fangschalen und Wasser ein Emulgierungsmittel bei einem Anteil von 0.5% bezogen auf das Wassergewicht enthält.

3. Ein paniertes Nuggetprodukt enthaltend ganze geschälte Garnele- oder andere geschälte Fangstücken gemäß Anspruch 1 oder 2, **dadurch gekennzeichnet daß** die Panierungsmischung die folgenden Zusammensetzung aufweist: Brotkrümel: (Reismehl (50-60%), Kichererbsemehl, Maismehl (1-5%), Salz, Dextrose (<1%); Mehl: Reismehl (90-100%), Salz (5-10%), Pfeffer (1-5%), wobei die Breimischung durch Mischen von Mehl und Wasser bei einem Verhältnis 1:1.72 hergestellt ist.

4. Ein paniertes Nuggetprodukt enthaltend ganze geschälte Garnele- oder andere geschälte Fangstücken gemäß Anspruch 1, 2 oder 3, **dadurch gekennzeichnet daß** die Mischung von geschälten Garnelen oder anderem geschältem Fang die folgenden Zusammensetzung aufweist: 93.6% bis 94.1% geschälte Garnelen oder anderer geschälter Fang, 0.5% bis 0% Bindemittelmischung, 0.28% Psyllium (Faser), 0.092% Geschmackverstärker/Geschmackzusätze- und/oder Gezürzemischung in der Form einer pulverigen oder fein geschnittenen Mischung, 2.75% vermahlene Garneleschalen oder vermahlene andere Fangschalen, 2.75% Wasser, wobei die Mischung von geschälten Garnelen oder anderem geschältem Fang in der Form eines Breis ist, in den die ganzen Garnelenstücken oder die anderen geschälten Fangstücken eingetaucht sind.

5. Ein paniertes Nuggetprodukt von ganzen geschälten Garnelestücken oder anderen geschälten Fangstücken gemäß Anspruch 4, **dadurch gekennzeichnet daß** die Mischung von geschälten Garnelen oder anderem geschältem Fang ein Emulgierungsmittel bei einem Anteil von 0.5% bezogen auf das Wassergewicht enthält.

6. Ein paniertes Nuggetprodukt von ganzen geschälten Garnelestücken oder anderen geschälten Fangstücken gemäß Anspruch 4 oder 5, **dadurch gekennzeichnet daß** der Geschmackverstärker/Zusatz Mononatriumglutamat ist.

7. Ein paniertes Nuggetprodukt von ganzen geschälten Garnelestücken oder anderen geschälten Fangstücken gemäß Anspruch 1,2,3,4,5 oder 6, **dadurch gekennzeichnet daß** die Mischung von geschälten Garnelen oder anderem geschältem Fang eine Mischung aus vermahlenen Garnelenschalen oder vermahlenen anderen Fangschalen und Wasser und optional einem Emulgierungsmittel bei einem Anteil von 0.5% bezogen auf das Wassergewicht enthält.

8. Ein paniertes Nuggetprodukt von ganzen geschälten Garnelestücken oder anderen geschälten Fangstücken gemäß Anspruch 1,2,3,4,5,6 oder 7, **dadurch gekennzeichnet daß** das Produkt geschälte Garnelestücke enthält und daß eine Mischung aus vermahlenen Garneleschalen und Wasser als das Farbstoff und Bindemittel für die geschälten Garnelen verwendet ist.

9. Ein paniertes Nuggetprodukt von ganzen geschälten Garnelestücken oder anderen geschälten Fangstücken gemäß Anspruch 8, **dadurch gekennzeichnet daß** die Garnelesorte Parapenaeus longisrostris ist.

10. Verwendung einer Mischung aus vermahlenen Garnelenschalen oder vermahlenen anderen Fangschalen und Wasser in einem Verhältnis 1:1 mit oder ohne Emulgierungsmittel bei einem Anteil von 0.5% bezogen auf das Wassergewicht als Farbstoff und Bindemittel für die Mischung von geschälten Garnelen oder anderem geschältem Fang.

11. Verfahren zur Herstellung von geschälte Garnelestücke- oder andere Fangstücke-enthaltenen panierten Nuggets **gekennzeichnet durch** die folgenden Schritten:
i. Schälen der Garnelen oder anderes Schalenfangs, Sammeln der Schalen und Vermahlen der Schalen auf einer Schneidmaschine, wobei das Schälen in einem Raum bei maximaler Temperatur von 12°C durchgeführt wird.
ii. Hitzen des Wassers auf einer Temperatur von 60°C und optional Mischen des Wassers mit einem Emulgierungsmittel auf einem Hydrokolloidhomogenizer, wobei das Emulgierungsmittel bei einem Anteil von 0.5% bezogen auf das Wassergewicht zugesetzt wird.
iii. Kühlen der Mischung aus Wasser und Emulgierungsmittel oder nur des Wassers, wenn kein Emulgierungsmittel zugesetzt ist, auf Raumtemperatur
iv. Mischen der vermahlenen Garneleschalen oder anderen Fangschalen mit der Wasser/Emulgierungsmittel-Lösung oder nur mit dem Wasser, wenn kein Emulgierungsmittel zugesetzt ist, in einem Verhältnis 1:1 auf einem Hydrokolloidhomogenizer, um eine Mischung für das nachfolgende Färben und Binden der geschälten Garnelen oder des geschälten anderen Fangs herzustellen.
v. Auflösen von Natriumcitrat-anhydrat bei einem Anteil von 3.5% ins Wasser.
vi. Mischen der Natriumcitrat-Lösung mit ganzen geschälten Garnelestücken oder anderen Fangstücken in einem Verhältnis von 0.1:1 für 20 Min. under 5% Vakuum bei 2°C auf einer Vakuumtrommel.
vii. Zusetzen der Mischung zum Färben und Binden der geschälten Garnelen oder anderes Fangs bei einem Anteil von 6% bezogen auf das anfängliche Gewicht der geschälten Garnelen in die Vakuumtrommel, und Mischen für 20 Min under 5% Vakuum bei 2°C.
viii. Zusetzen der Bindemittelmischung bei einem Anteil von 0.5% bis 0% bezogen auf das Gewicht der Garnele- oder Fangmischung, 0.3% Psyllium (Faser) und 0.1% mononatriumglutamat oder anderer Geschmachverstärker/Geschmackzusatz und/oder Gewürzemischung in der Form einer pulverigen oder fein geschnittenen Mischung in die Vakuumtrommel, wobei die Mengen bezogen auf das anfängliche Gewicht der geschälten Garnelen oder des geschälten anderen Fangs berechnet sind, und Mischen für 20 Min. ohne Vakuum bei 2°C, um eine Mischung, die in Brei eingetauchte ganze Garnelenstücke oder andere Fangstücke enthält, zu erhalten.
ix. Zuführen der Mischung, die ganze, in Brei eingetauchte Garnelestücke oder andere Fangstücke enthält, in eine Formmaschine, wobei bei einer Temperatur von - 2 bis 0°C ganze Garnelestücke oder andere Fangstücke-enthaltene Nuggets die Maschineform in einer bestimmten Formung austreten.
x. Vorpanieren der Nuggets.
xi. Durchfahren durch einem "Breibehang", wobei die Breimischung durch Mischen von Mehl und Wasser in einem 1:1.72 Verhältnis hergestellt worden ist und wobei entweder chemisch-modifizierte Stärke und/oder Zellulose und/oder beta-Glukanderivaten zu dem Brei optional zugesetzt werden können, bei durch Lebensmittelgesetze vorgeschriebenen Anteilen, und Salz.
xii. Panieren der Nuggets in einer Brotkrümel/Mehl-Mischung.
xiii. Vorbraten der Nuggets mit Sonneblumenöl oder anderem geeignetem Öl für Braten auf einem Sprühbrater und
xiv. Durchfahren der vorgebratenen Nuggets durch einen Gefriertunnel wobei die Nuggets bei einer Temperatur von -18°C (gefrorene Produkte) oder 0°C (gekühlte Produkte) treten aus.

12. Verfahren zur Herstellung von geschälte Garnelestücke- oder andere Fangstücke-enthaltenen panierten Nuggets gemäß Anspruch 11, wobei anstatt einer Vakuumtrommel ein anderer Mischer mit oder ohne Messer und mit oder ohne Vakuum verwendet wird.

13. Verfahren zur Herstellung von geschälte Garnelestücke- oder andere Fangstücke-enthaltenen panierten Nuggets gemäß Anspruch 11 oder 12, wobei das Panierungsmittel die folgende Zusammensetzung aufweist: Brotkrümel: (Reismehl (50-60%), Kichererbsemehl, Maismehl (1-5%), Salz, Dextrose (<1%): Mehl: Reismehl (90-100%), Salz (5-10%), Pfeffer (1-5%).

14. Verfahren zur Herstellung von geschälte Garnelestücke- oder andere Fangstücke-enthaltenen panierten Nuggets gemäß Anspruch 12 oder 13, wobei die Mischung zum Färben und Binden der geschälten Garnelen oder des geschälten anderen Fangs eine Mischung aus vermahlenen Garneleschalen oder vermahlenen anderen Fangschalen und Wasser und optional einer Emulgierungsmittel bei einem Anteil von 0.5% bezogen auf das Wassergewicht enthält.

15. Verfahren zur Herstellung von geschälte Garnelestücke- oder andere Fangstücke-enthaltenen panierten Nuggets gemäß Anspruch 14, wobei die Garnelesorte Parapenaeus longirostris ist.

## Revendications

1. Un produit de pépites panées, contenant de pièces entières de crevettes décortiquées ou d'autres captures pelées, qui contient 40% à 60% de mélange de panure, contenant un mélange de chapelure, de farines et de gruau et 60% à 40% de mélange de crevettes décortiquées ou d'autres captures pelées, **caractérisé en ce que** le mélange de crevettes décortiquées ou d'autres captures pelées contient un mélange à partir de coquille de crevettes broyée ou de coquille d'autres captures broyée et d'eau, utilisé comme de matériau de coloration et de liant pour les crevettes décortiquées ou les autres captures pelées sans l'utilisation de substances de coloration synthétiques, où ce mélange n'est pas utilisé en tant que matériau de panure.

2. Le produit de pépites panées de pièces entières de crevettes décortiquées ou d'autres captures pelées selon la revendication 1, **caractérisé en ce que** le mélange à partir de coquille de crevettes broyée ou de coquille d'autres captures broyée et d'eau contient d'émulsifiant en une quantité de 0,5% par rapport du poids de l'eau.

3. Le produit de pépites panées de pièces entières de crevettes décortiquées ou d'autres captures pelées selon la revendication 1 ou 2, **caractérisé en ce que** la composition du mélange de panure est la suivante : Chapelure : (farine de riz (50-60%), farine de pois chiche, farine de maïs (1-5%), sel, dextrose (<1%). Farines : farine de riz (90-100%), sel (5-10%), Poivre (1-5%), dans lequel le mélange de gruau a été produit par mélangeage de farine-eau dans une proportion 1 : 1,72.

4. Le produit de pépites panées de pièces entières de crevettes décortiquées ou d'autres captures pelées selon la revendication 1, 2 ou 3, **caractérisé en ce que** la composition du mélange de crevettes décortiquées ou d'autres captures pelées est la suivante : 93,6% à 94,1% % de crevettes décortiquées ou d'autres captures pelées, de mélange de substances de liaison allant de 0,5% à 0%, 0,28% de psyllium (fibres), 0,092% de exhausteur/additif de goût ou/et assaisonnements et épices sous forme de poudre ou de mélange finement haché, 2,75% de coquille de crevettes broyée ou de coquille d'autres captures broyée et 2,75% d'eau, dans lequel le mélange de crevettes décortiquées ou d'autres captures pelées est sous forme de gruau dans lequel des parties entières de crevettes ou d'autres captures pelées sont immergés.

5. Le produit de pépites panées de pièces entières de crevettes décortiquées ou d'autres captures pelées selon la revendication 4, **caractérisé en ce que** le mélange de crevettes décortiquées ou d'autres captures pelées contient également d'émulsifiant en une quantité de 0,5% par rapport du poids de l'eau.

6. Le produit de pépites panées de pièces entières de crevettes décortiquées ou d'autres captures pelées selon la revendication 4 ou 5, **caractérisé en ce que** l'exhausteur/additif de goût est le glutamate monosodique.

7. Le produit de pépites panées de pièces entières de crevettes décortiquées ou d'autres captures pelées selon la revendication 1, 2, 3, 4, 5 ou 6 **caractérisé en ce que** le mélange de crevettes décortiquées ou d'autres captures pelées contient un mélange à partir de coquille de crevettes broyée ou de coquille d'autres captures broyée et d'eau et éventuellement d'émulsifiant en une quantité de 0,5% par rapport du poids de l'eau.

8. Le produit de pépites panées de pièces entières de crevettes décortiquées ou d'autres captures pelées selon la revendication 1, 2, 3, 4, 5, 6 ou 7, **caractérisé en ce que** le produit contient de pièces de crevettes décortiquées et **en ce que** un mélange de coquille de crevettes broyée et d'eau est utilisé comme de matériau de coloration et de liant pour les crevettes décortiquées.

9. Le produit de pépites panées de pièces entières de crevettes décortiquées ou d'autres captures pelées selon la revendication 8, **caractérisé en ce que** les crevettes appartiennent à l'espèce Parapenaeus longirostris.

10. Utilisation d'un mélange à partir de coquille de crevettes broyée ou de coquille d'autres captures broyée et d'eau dans une proportion 1 : 1 avec ou sans l'émulsifiant en une quantité de 0,5% par rapport du poids de l'eau comme de matériaux de coloration et de liant pour le mélange de crevettes décortiquées ou d'autres captures pelées.

11. Une méthode pour la production de pépites panées contenant de pièces de crevettes décortiquées ou d'autres captures pelées **caractérisée par** les étapes suivantes:
i. Décorticage des crevettes ou des autres captures portant de coquille, recueil des coquilles et broyage dans une machine à couper, et le décorticage est effectué dans un espace avec une température maximale de 12°C
ii. L'eau est chauffée à une température de 60°C et éventuellement l'eau est mélangée avec l'émulsifiant dans un homogénéisateur hydrocolloïde, dans lequel l'émulsifiant est ajouté en une quantité de 0,5% par rapport du poids de l'eau
iii. Refroidissement du mélange d'eau et d'émulsifiant ou seulement de l'eau si on n'a pas ajouté d'émulsifiant à la température ambiante
iv. Mélangeage de la coquille de crevettes broyée ou de la coquille d'autres captures broyée avec la solution à base d'eau-émulsifiant ou, si on n'a pas ajouté d'émulsifiant, avec l'eau dans une proportion 1 : 1 dans un homogénéisateur hydrocolloïde pour produire le mélange pour la coloration et la liaison suivantes pour les crevettes décortiquées ou les autres captures
v. Dissolution de 3,5% en poids de citrate de sodium anhydre dans l'eau
vi. Mélangeage de la solution de citrate de sodium avec les parties entières de crevettes décortiquées ou les pièces d'autres captures dans une baratte sous vide dans une proportion 0,1 : 1 pour 20' sous vide 5% et à une température de 2°C
vii. Addition dans la baratte sous vide du mélange pour la coloration et la liaison des crevettes décortiquées ou d'autres captures en une quantité 6% en poids du poids initial de crevettes décortiquées et mélangeage pour 20' sous vide 5% et à une température de 2°C.
viii. Addition dans la baratte sous vide du mélange de substances de liaison en une quantité comprise dans la plage de 0,5% à 0% en poids du mélange de crevettes ou d'autres captures, 0,3% de psyllium (fibres) et 0,1% de glutamate monosodique ou d'autre exhausteur/additif de goût ou/et assaisonnements et épices sous forme de poudre ou de mélange finement haché, dans lequel les quantités sont calculées sur la base du poids initial de crevettes décortiquées ou d'autres captures et mélangeage du contenu pour 20' sans vide et à une température de 2°C, résultant à la production du mélange contenant de parties entières de crevettes ou de pièces d'autres captures immergées dans le gruau.
ix. Chargement du mélange, qui contient de parties entières de crevettes ou de pièces d'autres captures immergées dans le gruau, dans une machine à former, dans laquelle à une température allant de -2 à 0°C les pépites contenant de parties entières de crevettes ou de pièces d'autres captures sortent de la matrice de la machine dans une forme prédéterminée
x. Pré-farinage des pépites
xi. Passage à travers d'un « rideau » de gruau, dans lequel le mélange de gruau a été produit au moyen de mélangeage de farine-eau dans une proportion 1 : 1,72 et dans lequel on peut ajouter éventuellement dans le gruau de fécule modifié chimiquement ou/et de cellulose ou/et de dérivés de bâta-glucane, dans les quantités indiquées par la législation alimentaire, ainsi que de sel.
xii. Panure des pépites dans le mélange de chapelure et de farine.
xiii. Pré-friture de pépites avec d'huile de tournesol ou toute autre huile indiquée pour la friture dans une friteuse industrielle de type de « spray fryer » et
xiv. Passage des pépites pré-frites à travers d'un tunnel de congélation, duquel ils sortent à une température soit -18°C (produits congelés) soit 0°C (produits réfrigérés).

12. Méthode pour la production de pépites panées contenant de pièces de crevettes décortiquées ou d'autres captures selon la revendication 11, dans laquelle au lieu de la baratte sous vide on peut utiliser d'autres mélangeurs avec ou sans pelles et avec ou sans vide.

13. Méthode pour la production de pépites panées contenant de pièces de crevettes décortiquées ou d'autres captures selon la revendication 11 ou 12, dans laquelle la composition du mélange de panure est la suivante : Chapelure : (farine de riz (50-60%), farine de pois chiche, farine de maïs (1-5%), sel, dextrose (<1%). Farines : farine de riz (90-100%), sel (5-10%), poivre (1-5%).

14. Méthode pour la production de pépites panées contenant de pièces de crevettes décortiquées ou d'autres captures selon la revendication 12 ou 13, dans laquelle le mélange pour la coloration et la liaison de crevettes décortiquées ou d'autres captures contient un mélange à partir de coquille de crevettes broyée ou de coquille d'autres captures broyée et d'eau et éventuellement d'émulsifiant en une quantité de 0,5% par rapport du poids de l'eau.

15. Méthode pour la production de pépites panées contenant de pièces de crevettes décortiquées ou d'autres captures selon la revendication 14, dans laquelle les crevettes appartiennent à l'espèce Parapenaeus longirostris.
